Europäisches Patentamt

European Patent Office

Office européen des brevets

(19)

(11) EP 0 503 558 B1

# (12) FASCICULE DE BREVET EUROPEEN

(45) Date de publication et mention
de la délivrance du brevet:
**05.06.1996 Bulletin 1996/23**

(51) Int Cl.⁶: **G02B 6/38**, G01M 11/00

(21) Numéro de dépôt: **92104072.1**

(22) Date de dépôt: **10.03.1992**

(54) **Dispositif de visualisation du coeur d'une fibre optique**

Einrichtung zur Sichtbarmachung des Kerns einer Glasfaser

Device for displaying the core of an optical fiber

(84) Etats contractants désignés:
**DE FR GB IT NL SE**

(30) Priorité: **12.03.1991 FR 9102956**

(43) Date de publication de la demande:
**16.09.1992 Bulletin 1992/38**

(73) Titulaire: **ALCATEL FIBRES OPTIQUES**
**F-95871 Bezons Cedex (FR)**

(72) Inventeurs:
• **Hakoun, Roland**
**F-95330 Domont (FR)**
• **Robert, Philippe**
**F-95220 Herblay (FR)**
• **Reslinger, Michel**
**F-91070 Bondoufle (FR)**
• **Galopin, Joan**
**F-78610 Saint Léger en Yvelines (FR)**

(74) Mandataire: **Weinmiller, Jürgen et al**
**Lennéstrasse 9**
**Postfach 24**
**82336 Feldafing (DE)**

(56) Documents cités:
**EP-A- 0 237 426**          EP-A- 0 321 947
**DE-A- 3 335 579**

• **JOURNAL OF LIGHTWAVE TECHNOLOGY, vol.
LT-2, no. 2, avril 1984, pages 185-191, New York,
US; O. KAWATA et al.: "A splicing and
inspection technique for single-mode fibers
using direct core monitoring"**
• **PATENT ABSTRACTS OF JAPAN, vol. 9, no. 210
(P- 383)(1933), 28 août 1985 ; & JP-A-60 070 407**
• **PATENT ABSTRACTS OF JAPAN, vol. 9, no. 174
(P- 374)(1897), 19 juillet 1985 ; & JP-A-60 049 307**

# Description

La présente invention concerne un dispositif de visualisation du coeur d'une fibre optique, destiné en particulier à faciliter le positionnement de deux fibres optiques avant leur soudure.

Afin d'aligner deux fibres optiques en vue de leur soudure, il n'est pas suffisant de vérifier que leurs contours sont alignés. Il faut en outre bien s'assurer de l'alignement de leurs coeurs, en particulier dans le cas des fibres monomodes pour lesquelles un faible mésalignement des coeurs entraîne une augmentation d'atténuation importante au niveau de la soudure. Pour améliorer la précision du positionnement des coeurs, les dispositifs classiquement utilisés, comme celui décrit dans la demande de brevet EP-0321947, permettent d'observer le coeur d'une fibre optique selon deux directions orthogonales.

Dans de tels dispositifs deux sources lumineuses permettent d'éclairer une fibre optique, ou deux fibres optiques placées sensiblement dans le prolongement l'une de l'autre, dans deux directions orthogonales entre elles et orthogonales à l'axe longitudinal de la fibre.

Un dispositif d'observation comme un microscope est placé de manière d'une part à faire coïncider son axe focal avec l'une des deux directions d'illumination et d'autre part à recevoir le faisceau lumineux transmis par la fibre dans cette direction. Le second faisceau transmis par la fibre est renvoyé sur le microscope au moyen d'un miroir placé sur son trajet. On obtient alors deux images séparées de la fibre avec son coeur, ces deux images figurant ce que l'on observe dans les deux directions orthogonales d'illumination.

De tels dispositifs nécessitent donc l'utilisation d'un ou plusieurs miroirs qui posent un certain nombre de problèmes.

En premier lieu, du fait des différences de températures importantes entre le milieu ambiant et la zone de soudure des deux fibres, où se produit un arc électrique, le ou les miroirs utilisés sont souvent embués, ce qui rend l'image renvoyée floue, peu précise et en pratique inutilisable en vue de l'alignement des coeurs.

Par ailleurs, les miroirs peuvent se rayer, recevoir des poussières ou impuretés extérieures, ce qui est également préjudiciable à la qualité de l'image observée.

Enfin, ils doivent être positionnés très précisément pour permettre l'obtention d'images nettes.

D'autres dispositifs permettent de se passer de miroirs en utilisant deux caméras distinctes et en traitant séparément les images reçues par ces deux caméras, ou bien en employant une caméra mobile que l'on déplace d'une image à l'autre (voir brevet JP -60 049307).

La présente invention a pour but de réaliser un dispositif moins onéreux et moins complexe que ceux de l'art antérieur pour observer le coeur d'une fibre optique selon deux directions orthogonales.

La présente invention propose à cet effet un dispositif de visualisation du coeur d'une fibre optique selon deux directions transversales à ladite fibre comprenant :

- deux sources de lumière éclairant ladite fibre et émettant chacune un faisceau, lesdits faisceaux ayant des directions distinctes $D_1$ et $D_2$, lesdites directions étant situées dans un plan orthogonal à l'axe longitudinal de ladite fibre,
- des moyens de réception et de visualisation des images de ladite fibre produites par lesdits faisceaux,
- un objectif disposé entre la fibre à observer et lesdits moyens de réception et de visualisation, caractérisé en ce que lesdits faisceaux sont tels qu'ils comportent des rayons incidents sur ladite fibre qui sont déviés par cette dernière de sorte qu'ils sont tangents au coeur et s'interceptent à l'intérieur de la fibre aux points de convergence, ainsi que des rayons tangents à ladite fibre et non déviés par cette dernière, en ce que ledit objectif est mis au point dans un plan situé entre ledit coeur et les points de convergence des rayons issus dudit coeur et interceptant lesdits faisceaux déviés à l'intérieur de ladite fibre, et en ce que l'angle entre l'une ou l'autre desdites directions $D_1$ et $D_2$ et l'axe optique de l'objectif est compris entre 112,5 et 157,5°, de sorte que ledit objectif reçoit directement lesdits faisceaux avec une intensité lumineuse suffisante pour permettre le fonctionnement desdits moyens de visualisation.

Avantageusement, l'angle entre l'une ou l'autre des directions $D_1$ et $D_2$ et l'axe focal peut être compris entre 112,5 et 157,5°.

Les directions $D_1$ et $D_2$ peuvent être orthogonales entre elles. On peut alors choisir l'angle entre $D_1$ ou $D_2$ et l'axe focal égal, pour les deux directions $D_1$ et $D_2$, à 135°.

D'autre part, les faisceaux peuvent être collimatés, avant d'intercepter la fibre, grâce à deux lentilles se trouvant respectivement sur chacun des trajets des faisceaux, entre chacune des sources et fibre.

Enfin, les moyens de réception et de visualisation comprennent une caméra CCD reliée à un système de traitement d'image pour observer sur un écran l'image obtenue.

D'autres caractéristiques et avantages apparaîtront dans la description suivante d'un dispositif selon l'invention, donnée à titre illustratif et nullement limitatif.

Dans les figures suivantes :

- la figure 1 représente schématiquement un dispositif selon l'invention,
- la figure 2 montre le chemin optique de chacun des faisceaux,
- la figure 3 montre l'image observée sur la caméra du dispositif de la figure 1.

Dans toutes ces figures on appelle amont d'un point l'espace situé entre les sources de lumière et ce point, et aval celui situé entre ce point et la caméra.

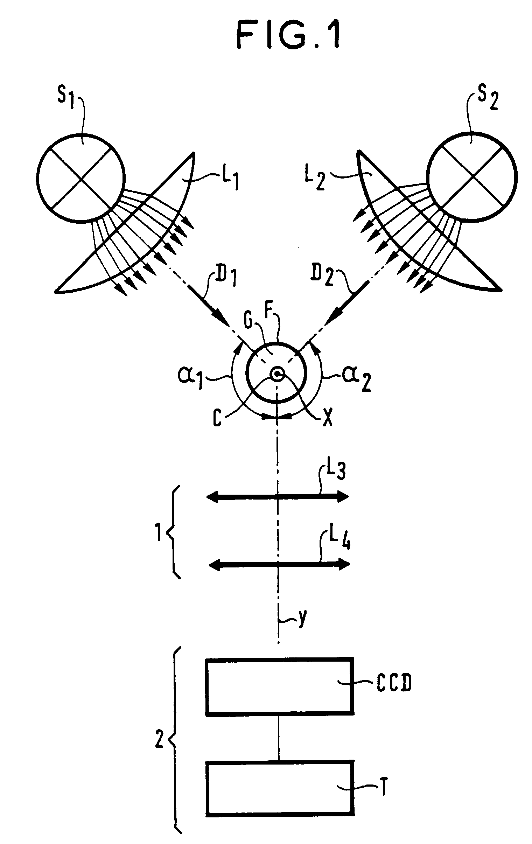

Dans la figure 1, deux sources de lumière mono-chromatique $S_1$ et $S_2$ émettent dans deux directions représentées respectivement par les flèches $D_1$ et $D_2$ et orthogonales entre elles. Ces deux directions $D_1$ et $D_2$ se trouvent dans un plan orthogonal à l'axe longitudinal X d'une fibre F à observer, dont on n'a représenté que le coeur C et la gaine extérieure de protection G. Entre les sources $S_1$ et $S_2$ et la fibre F, sur le trajet de la lumière, sont placées deux lentilles respectivement $L_1$ et $L_2$. Ces deux lentilles permettent de collimater la lumière émise par $S_1$ et $S_2$. En aval de la fibre F, du côté opposé par rapport aux sources $S_1$ et $S_2$, se trouve un objectif et un dispositif 2 de réception et de visualisation de l'image reçue issue de la fibre F. Cet objectif contient deux lentilles $L_3$ et $L_4$, parallèles, de même axe focal y qui constitue donc l'axe optique de l'objectif 1, de sorte que l'angle $\alpha_1$ entre $D_1$ et y et l'angle $\alpha_2$ entre $D_2$ et y soient égaux tous les deux à 135°.

On place, en aval de la lentille $L_4$, le dispositif 2 de réception et de visualisation comprenant une caméra CCD reliée à un système T de traitement de l'image CCD reçue. Le plan de la caméra CCD est parallèle aux lentilles $L_3$ et $L_4$.

Afin d'observer le coeur C de la fibre F selon les deux directions $D_1$ et $D_2$, on illumine la fibre F au moyen des deux sources $S_1$ et $S_2$.

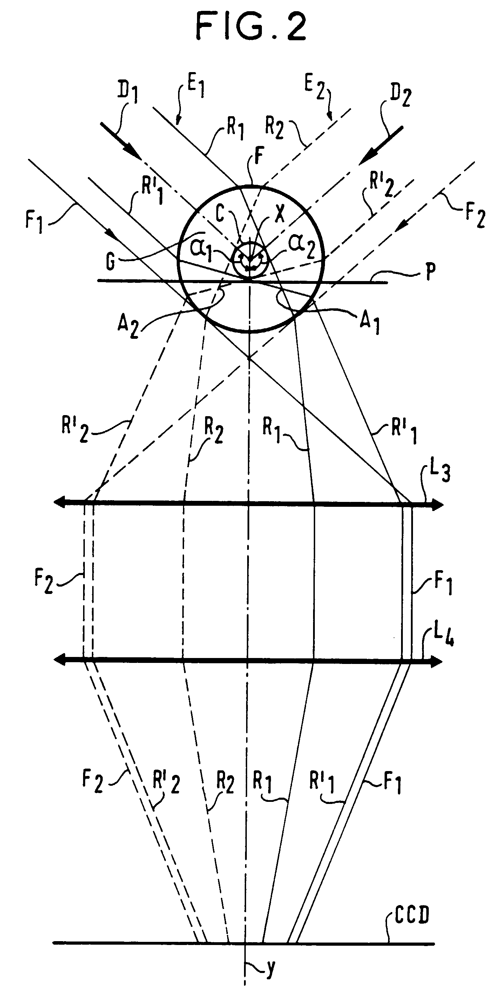

Dans la figure 2, les faisceaux issus de la source $S_1$ sont représentés en trait plein et ceux issus de la source $S_2$ en trait discontinu.

Certains des faisceaux issus de $S_1$ arrivant paral-lèlement les uns aux autres sur la gaine G, sont déviés à l'intérieur de cette dernière de telle sorte qu'ils arrivent tangents au coeur C. Il en est de même pour certains des faisceaux issus de $S_2$ pénétrant dans la gaine G. Les faisceaux issus de $S_1$ et $S_2$, déviés par la gaine G et incidents sur le coeur C sont déviés par ce dernier. Ceux arrivant tangentiellement au coeur C ne sont pas déviés par ce dernier.

On n'a représenté sur la figure, pour des raisons de clarté, que les rayons $F_1$ et $F_2$ issus de $S_1$ et $S_2$ formant les bords de l'image de la fibre F. De même, on n'a il-lustré que l'enveloppe $E_1$ des rayons issus de $S_1$ for-mant l'image du coeur C dans la direction $D_1$, et l'enve-loppe $E_2$ des rayons issus de $S_2$ formant l'image du coeur C dans la direction $D_2$. Les rayons extrêmes $R_1$ et $R'_1$ formant l'enveloppe $E_1$ sont déviés par la gaine G de sorte qu'ils arrivent tangents au coeur C et ne sont donc pas déviés par ce dernier ; ils convergent en aval du coeur C, dans la gaine G, en un point $A_1$. De même, les rayons-extrêmes $R_2$ et $R'_2$ formant l'enveloppe $E_2$ sont déviés par la gaine G de sorte qu'ils arrivent tangents au coeur C, ne sont pas déviés par ce dernier et convergent en aval du coeur C, dans la gaine G, en un point $A_2$.

L'objectif 1 est mis au point dans un plan P orthogonal au plan de la figure et parallèle aux lentilles $L_3$ et $L_4$. Ce plan P coupe la fibre en amont des points $A_1$ et $A_2$. Ainsi, on obtient sur le dispositif de visualisation une seule image de la fibre F à l'intérieur de laquelle sont dessinées les deux images $C_1$ et $C_2$ du coeur C inter-ceptées par le plan P.

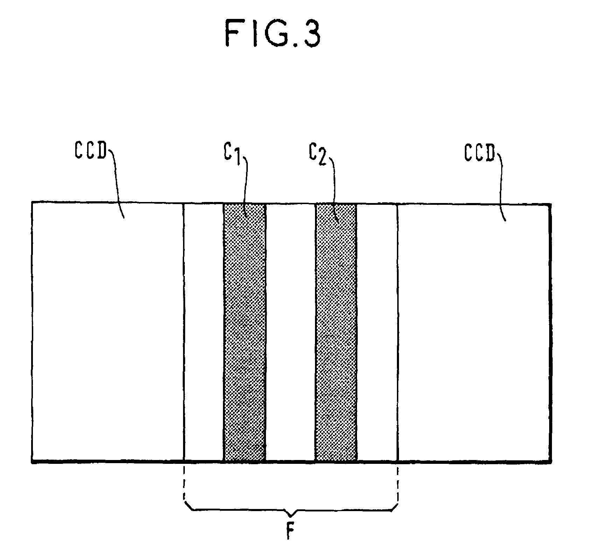

Ces images $C_1$ et $C_2$ du coeur C à l'intérieur de l'image de la fibre F (également notée F) sont représen-tées en figure 3. Elles ont un contraste différent de celui du reste de l'image, dû à la différence entre l'indice $n_G$ de la gaine et l'indice $n_C$ du coeur : elles sont plus foncées que le reste de l'image. On voit ainsi les images du coeur $C_1$ et $C_2$ représentées en en grisé, et l'image F de la fibre F. Ceci permet le traitement de l'image obtenue et notamment le calcul des pertes dues à la soudure.

Grâce à la position de l'axe focal y ($\alpha_1 = \alpha_2 = 135°$) et au plan de mise au point à l'intérieur de la fibre, il est donc possible d'intercepter les deux faisceaux en même temps, les deux faisceaux ayant le même chemin optique, sans avoir à utiliser de miroirs de renvoi. On n'emploie qu'un objectif associé à une caméra qui reçoit directement les deux images du coeur correspondant à deux directions d'observation orthogonales.

On a donc réalisé un dispositif de visualisation du coeur d'une fibre selon deux directions orthogonales, simple à utiliser, nécessitant un matériel limité et donc moins onéreux que les dispositifs classiques de l'art antérieur. D'autre part, ce dispositif permet un traitement de l'image simple et rapide.

Bien entendu, l'invention n'est pas limitée au mode de réalisation qui vient d'être décrit.

En particulier, il est possible de déplacer l'axe y, et donc de changer les valeurs de $\alpha_1$ et $\alpha_2$. Toutefois, lors-que $\alpha_1 = 180°$ par exemple, le système de visualisation ne reçoit pas l'image du coeur dans la direction $D_2$. Le raisonnement est le même pour $\alpha_2 = 180°$. Il existe donc une valeur critique $\alpha_{sup}$, que $\alpha_1$ et $\alpha_2$ ne doivent pas dépasser ; au-delà de cette valeur, par exemple pour $\alpha_1$, $\alpha_{sup}$ l'image du coeur C dans la direction $D_2$ sera déformée et de trop faible intensité pour pouvoir être analysée. La valeur de $\alpha_{sup}$ correspond à :

$$\alpha_{sup} = \frac{180 - 135}{2} + 135 = 157,5°$$

De même, il faut que $\alpha_1$ et $\alpha_2$ soient supérieurs à $\alpha_{inf}$ où :

$$\alpha_{inf} = 135 - 22,5 = 112,50°$$

Il est préférable de conserver $\alpha_1$ et $\alpha_2$ entre ces deux valeurs.

Par ailleurs, il n'est pas nécessaire que les deux directions d'illumination soient orthogonales entre elles. Si l'on désire observer le coeur de la fibre selon d'autres directions, il suffit de vérifier que les angles $\alpha_1$ et $\alpha_2$ dé-finis par ces deux directions avec l'axe focal y restent bien entre les deux valeurs $\alpha_{inf}$ et $\alpha_{sup}$ donnée ci-des-sus.

Il n'est pas non plus nécessaire que la lumière issue

de $S_1$ et $S_2$ soit collimatée avant d'intercepter la fibre. Toutefois, cela est souhaitable pour obtenir un meilleur contraste de l'image reçue.

En outre, on peut utiliser le dispositif selon l'invention par exemple pour aligner les coeurs C et C' de deux fibres optiques F et F' à souder.

Pour aligner les fibres F et F', on prend par exemple la fibre F comme référence, puis on déplace la fibre F' dans la direction $D_1$ jusqu'à alignement des images de C et C' dans cette direction. Ensuite, on déplace la fibre F' dans la direction $D_2$ jusqu'à alignement des images de C et C' dans cette direction.

Enfin, il est possible d'adapter le dispositif selon l'invention afin de l'utiliser pour observer d'éventuels défauts sur le coeur d'une fibre optique défilant devant les sources $S_1$ et $S_2$, parallèlement à son axe longitudinal.

Bien évidemment, on pourra remplacer tout moyen par un moyen équivalent sans sortir du cadre de l'invention, comme défini dans les revendications suivantes.

## Revendications

1. Dispositif de visualisation du coeur (C) d'une fibre optique (F) selon deux directions transversales à ladite fibre (F) comprenant :

   - deux sources de lumière éclairant ladite fibre et émettant chacune un faisceau, lesdits faisceaux ayant des directions distinctes $D_1$ et $D_2$, lesdites directions étant situées dans un plan orthogonal à l'axe longitudinal (X) de ladite fibre (F),
   - des moyens de réception et de visualisation (CCD) des images de ladite fibre (F) produites par lesdits faisceaux,
   - un objectif ($L_3$, $L_4$) disposé entre la fibre à observer et lesdits moyens de réception et de visualisation (CCD),

   caractérisé en ce que lesdits faisceaux sont tels qu'ils comportent des rayons incidents sur ladite fibre (F) qui sont déviés par cette dernière de sorte qu'il sont tangents au coeur (C) et s'interceptent à l'intérieur de la fibre aux points de convergence ($A_1$, $A_2$), ainsi que des rayons tangents à ladite fibre (F) et non déviés par cette dernière, en ce que ledit objectif est mis au point dans un plan (P) situé entre ledit coeur (C) et les points de convergence des rayons issus dudit coeur (C) et interceptant lesdits faisceaux déviés à l'intérieur de ladite fibre (F), et en ce que l'angle ($\alpha_1$, $\alpha_2$) entre l'une ou l'autre desdites directions $D_1$ et $D_2$ et l'axe optique (y) de l'objectif ($L_3$, $L_4$) est compris entre 112,5 et 157,5°, de sorte que ledit objectif ($L_3$, $L_4$) reçoit directement lesdits faisceaux avec une intensité lumineuse suffisante pour permettre le fonctionnement desdits moyens de visualisation (CCD).

2. Dispositif selon la revendication 1, caractérisé en ce que lesdites directions ($D_1$, $D_2$) sont orthogonales entre elles.

3. Dispositif selon l'une des revendications 1 ou 2, caractérisé en ce que, lesdites directions ($D_1$, $D_2$) étant orthogonales entre elles, ledit angle ($\alpha_1$, $\alpha_2$) est égal, pour lesdites deux directions ($D_1$, $D_2$), à 135°.

4. Dispositif selon l'une des revendications 1 à 3, caractérisé en ce que ledit axe optique est orthogonal audit axe d'observation et appartient à un plan parallèle à celui formé par lesdites directions ($D_1$, $D_2$).

5. Dispositif selon l'une des revendications 1 à 4, caractérisé en ce que lesdits faisceaux sont collimatés avant d'intercepter ladite fibre (F).

6. Dispositif selon l'une des revendications 1 à 5, caractérisé en ce que, sur chacun des trajets desdits faisceaux issus desdites sources ($S_1$, $S_2$), entre chacune desdites sources et ladite fibre (F), se trouve une lentille qui permet de collimater lesdits faisceaux.

7. Dispositif selon l'une des revendications 1 à 6, caractérisé en ce que lesdits moyens de réception et de visualisation comprennent une caméra CCD reliée à un système de traitement d'image pour observer sur un écran l'image obtenue.

## Patentansprüche

1. Vorrichtung zur Sichtbarmachung des Kerns (C) einer Lichtleitfaser (F) gemäß zwei Richtungen quer zur Faser (F),

   - mit zwei Lichtquellen, die die Faser beleuchten und je ein Strahlenbündel aussenden, wobei die Strahlenbündel verschiedene Richtungen $D_1$ und $D_2$ in einer Ebene senkrecht zur Längsachse (X) der Faser (F) besitzen,
   - mit Mitteln zum Empfang und zur Sichtbarmachung (CCD) der Bilder der Faser (F), die von diesen Strahlenbündeln erzeugt werden,
   - mit einem Objektiv ($L_3$, $L_4$), das zwischen der zu betrachtenden Faser und den Mitteln zum Empfang und zur Sichtbarmachung (CCD) liegt,

   dadurch gekennzeichnet, daß die Strahlenbündel so gerichtet sind, daß sie auf die Faser (F) fallende Strahlen, die von dieser Faser so abgelenkt werden, daß sie tangential zum Kern (C) verlaufen und sich im Inneren der Faser an Konvergenzpunkten ($A_1$, $A_2$) schneiden, sowie tangential an der Faser (F) vorbeilaufende Strahlen aufweisen, die nicht von der Faser abgelenkt werden, daß das Objektiv auf eine Ebene (P) scharfgestellt wird, die zwischen dem Kern (C) und den Konvergenzpunkten der aus dem Kern (C) kommenden Strahlen liegt, und die im Inneren der Faser (F) abgelenkten Strahlenbündel empfängt, und daß der Winkel ($\alpha_1$, $\alpha_2$) zwischen jeder der Richtungen $D_1$ und $D_2$ und der optischen Achse (y) des Objektivs ($L_3$, $L_4$) zwischen 112,5 und 157,5° liegt, so daß das Objektiv ($L_3$, $L_4$) unmittelbar die Strahlenbündel mit einer ausreichenden Lichtstärke empfängt, um die Sichtbarmachung in den Mitteln (CCD) zu erlauben.

2. Vorrichtung nach Anspruch 1, dadurch gekennzeichnet, daß die Richtungen ($D_1$, $D_2$) zueinander senkrecht liegen.

3. Vorrichtung nach einem der Ansprüche 1 oder 2, dadurch gekennzeichnet, daß für den Fall, daß die Richtungen ($D_1$, $D_2$) zueinander senkrecht liegen, der Winkel ($\alpha_1$, $\alpha_2$) für die beiden Richtungen ($D_1$, $D_2$) 135° beträgt.

4. Vorrichtung nach einem der Ansprüche 1 bis 3, dadurch gekennzeichnet, daß die optische Achse senkrecht zur Beobachtungsachse liegt und zu einer Ebene gehört, die parallel zu der von den beiden Richtungen ($D_1$, $D_2$) gebildeten Ebene liegt.

5. Vorrichtung nach einem der Ansprüche 1 bis 4, dadurch gekennzeichnet, daß die Strahlenbündel kollimatiert werden, ehe sie auf die Faser (F) treffen.

6. Vorrichtung nach einem der Ansprüche 1 bis 5, dadurch gekennzeichnet, daß im Verlauf jedes der von den Quellen ($S_1$, $S_2$) kommenden Strahlenbündel zwischen der jeweiligen Quelle und der Faser (F) eine Linse liegt, die die Kollimatierung der Strahlenbündel erlaubt.

7. Vorrichtung nach einem der Ansprüche 1 bis 6, dadurch gekennzeichnet, daß die Mittel zum Empfang und zur Sichtbarmachung eine CCD-Kamera enthalten, die an ein Bildverarbeitungssystem angeschlossen ist, um auf einem Bildschirm das erhaltene Bild betrachten zu können.

## Claims

1. A device for displaying the core (C) of an optical fiber (F) in two directions that are transverse to said fiber (F), the device comprising:

   two light sources illuminating said fiber, each emitting a beam of light, said beams having different directions $D_1$ and $D_2$, said directions ly-

ing in a plane that is orthogonal to the longitudinal axis (X) of said fiber (F);
reception and display means (CCD) for receiving and displaying images of said fiber (F) produced by said beams; and
an objective lens ($L_3$, $L_4$) disposed between the fiber to be observed and said reception and display means (CCD);
the device being characterized in that said beams are such that they include incident rays on said fiber (F) with are deflected thereby so that they are tangential to the core (C) and intercept one another inside the fiber at the points of convergence ($A_1$, $A_2$), and also rays tangential to said fiber (F) and not deflected thereby, in that said objective lens is focused in a plane (P) situated between said core (C) and the points of convergence of the rays from said core (C) and intercepting said beams deflected inside said fiber (F), and in that the angle ($\alpha_1$, $\alpha_2$) between said focal axis (Y) and either of said directions $D_1$ and $D_2$ lies in the range 112.5° to 157.5°, such that said objective lens ($L_3$, $L_4$) directly receives said beams with sufficient light intensity to enable said display means (CCD) to operate.

2. A device according to claim 1, characterized in that said directions ($D_1$, $D_2$) are mutually orthogonal.

3. A device according to claim 1 or 2, characterized in that said directions ($D_1$, $D_2$) are mutually orthogonal and said angle ($\alpha_1$, $\alpha_2$) is equal for both of the two directions ($D_1$, $D_2$) to 135°.

4. A device according to any one of claims 1 to 3, characterized in that said optical axis is orthogonal to said observation axis and lies in a parallel plane thereto and formed by said directions ($D_1$, $D_2$).

5. A device according to any one of claims 1 to 4, characterized in that said beams are collimated prior to intercepting said fiber (F).

6. A device according to any one of claims 1 to 5, characterized in that a lens is located on the path of each of said beams from said sources ($S_1$, $S_2$), between each of said sources and said fiber, enabling said beams to be collimated.

7. A device according to any one of claims 1 to 6, characterized in that said reception and display means comprise a CCD camera connected to an image processing system for enabling the resulting image to be observed on a screen.

# FIG.1

# FIG.2

# FIG.3

CCD       $C_1$     $C_2$       CCD

F